Europäisches Patentamt

European Patent Office

Office européen des brevets

(19)

(11) Veröffentlichungsnummer: **0 234 040**
**B1**

(12) # EUROPÄISCHE PATENTSCHRIFT

(45) Veröffentlichungstag der Patentschrift:
13.06.90

(51) Int. Cl.⁵: **G05F 1/70, H02J 3/18**

(21) Anmeldenummer: **86117808.5**

(22) Anmeldetag: **19.12.86**

(54) Steuerverfahren für parallele thyristorgestellte Induktivitäten zur schnellen Blindstromkompensation.

(30) Priorität: **23.01.86 DE 3601990**

(43) Veröffentlichungstag der Anmeldung:
**02.09.87 Patentblatt 87/36**

(45) Bekanntmachung des Hinweises auf die Patenterteilung:
**13.06.90 Patentblatt 90/24**

(84) Benannte Vertragsstaaten:
**BE CH DE FR GB IT LI SE**

(56) Entgegenhaltungen:
**DE-A- 2 653 333**
**US-A- 4 555 659**

**PATENT ABSTRACTS OF JAPAN, Band 7,
Nr. 54 (P-180)[1199], 4. März 1983; &
JP-A-57 201 921 (TOKYO SHIBAURA DENKI
K.K.) 10-12-1982**
**IEEE TRANSACTIONS ON POWER APPARATUS AND
SYSTEMS, Band PAS-98, Nr. 6,
November/Dezember 1979, Seiten 2276-2283, IEEE, New
York, US; I. HOSONO et al.: "Suppression and
measurement of arc furnace flicker with a large static
VAR compensator"**

(73) Patentinhaber: **Siemens Aktiengesellschaft,
Wittelsbacherplatz 2, D-8000 München 2(DE)**

(72) Erfinder: **Lê, Thanh-Nam, Dr., Aschaffenburger
Strasse 16, D-8520 Erlangen(DE)**

## Beschreibung

Die Erfindung bezieht sich auf ein Verfahren zur Steuerung eines Blindstromstellers, der pro Phase der Netzspannung aus jeweils mindestens zwei parallelen Zweigen mit je einer in Reihe zu einem elektronischen Schalter angeordneten Induktivität besteht, mit den Merkmalen des aus dem Dokument US-A 4 555 659 bekannten Oberbegriffes.

Blindstromsteller dieser Art finden bevorzugt Anwendung bei Drehstrom-Lichtbogenschmelzöfen. Diese sind für das Netz und deren Regeleinrichtungen insbesondere während der Einschmelzphase schwierig zu beherrschende Verbraucher, welche die Qualität der gesamten Energieversorgung in ihrer Umgebung in unzulässiger Weise beeinträchtigen können. Sie belasten das Netz unsymmetrisch und haben einen hohen, stochastisch schwankenden Blindleistungsbedarf. Zudem sind die auftretenden Verbraucherströme stark oberwellenhaltig mit einem nur näherungsweise sinusförmigen Verlauf.

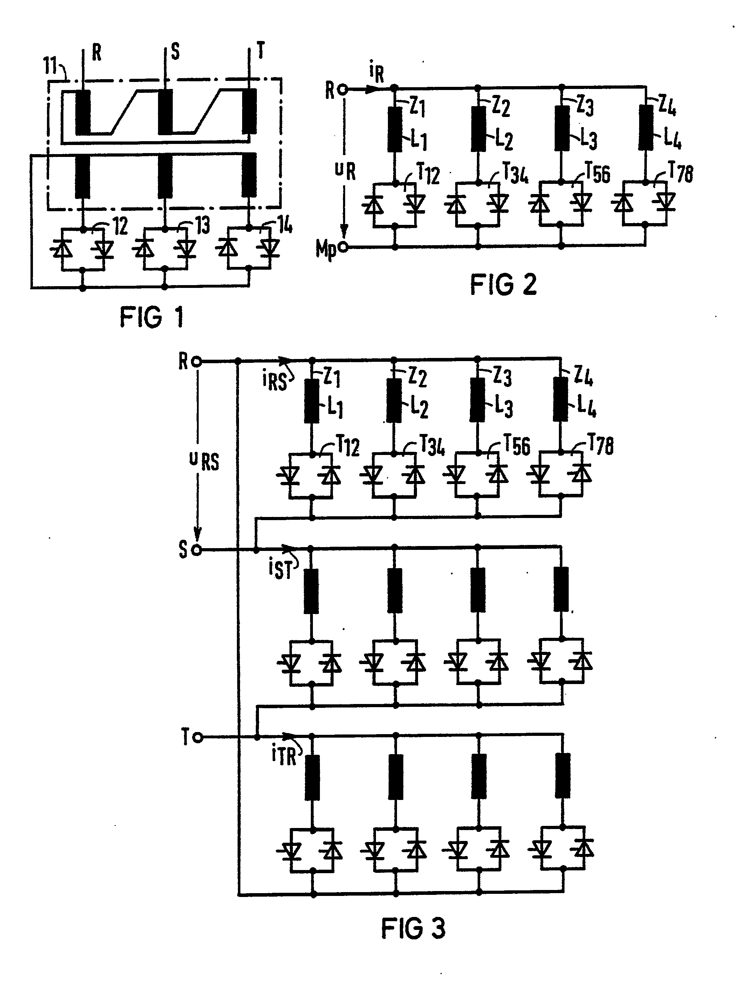

Aus diesen Gründen ist man bestrebt, durch besondere Kompensationsvorrichtungen und einer geeigneten Steuerung derselben die Rückwirkungen solcher Verbraucher auf das speisende Netz möglichst nahe am Verbraucher selbst und möglichst schnell zu unterdrücken. In Figur 1 ist eine bekannte Vorrichtung dieser Art dargestellt. Bei ihr können die einzelnen Wicklungen der Sekundärseite eines sogenannten "Reaktortransformators" 11 durch in Reihe liegende antiparallele Thyristorpaare 12, 13, 14 getrennt zugeschaltet werden. Diese separate Steuerung der einzelnen Phasen ermöglicht nicht nur eine Symmetrierung der Netzbelastung. Die Sekundärwicklungen stellen auch die zur Kompensation aktuell in der jeweiligen Phase benötigte induktive Blindleistung zur Verfügung.

Grundsätzlich kann zwischen den sogenannten "direkten" und den "indirekten" Kompensationsverfahren unterschieden werden. Während bei der direkten Kompensation durch gesteuertes Zuschalten von Kondensatorstufen Kompensationsblindleistung direkt bereitgestellt wird (sogenannte FC-bzw. TSC-Typen: festzugeschaltete bzw. thyristorgestellte Kondensatoren), werden beim indirekten Verfahren thyristorgestellte Drosselspulen parallel zu festen Kondensatorbatterien verwendet. Die zur Kompensation notwendige kapazitive Komponente wird in diesem Fall durch Veränderung einer zusätzlichen induktiven Komponente eingestellt (sogenannte TCR- bzw. TCSR-Typen: thyristorgestellte Drossel- bzw. Sättigungsdrosselspulen ("Reaktoren")).

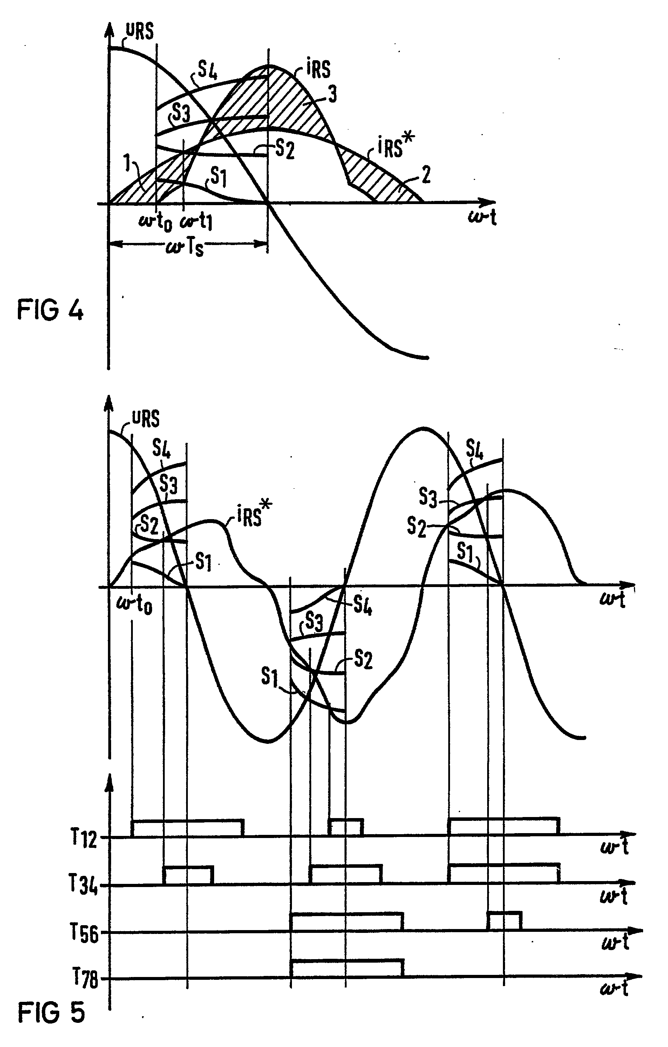

In der Veröffentlichung "Suppression and measurement of arc furnace flicker with a large static var compensator" in IEEE Transactions on Power Apparatus and Systems, Vol.PAS-98, No. 6, Nov./Dec. 1979, S. 2276 bis 2284 ist am Beispiel einer einphasigen Anordnung gemäß der dortigen Figur 5 das Grundprinzip eines Steuerverfahrens für einen gesteuerten "Reaktor" bei indirekter Kompensation dargestellt. Die notwendige Kapazität ergibt sich aus dem Zusammenwirken einzelner parallel geschalteter Reihenschwingkreise gemäß der dortigen Figur 2, deren Resonanzfrequenzen zusätzlich auf die Werte auszufilternder Oberschwingungen abgestimmt sind. Zudem dienen die Induktivitäten der Schwingkreise beim Zuschalten der unter Umständen nicht auf den Wert der Netzspannung aufgeladenen Kondensatoren zur Verhinderung kurzschlußartiger Ausgleichsströme. Zur Steuerung der thyristorgeschalteten Induktivität, desweiteren auch zuschaltbarer Zweig genannt, wird in einem Extremum der Netzspannung der Momentanwert des Ofenstromes gemessen. Dieser entspricht bei einphasiger Anordnung gerade der Amplitude des Wirkstromes, woraus sich bei bekannter Amplitude des Ofenstromes die gesuchte Amplitude des Blindstromes ergibt. Mit Hilfe dieser Blindstrom-Amplitude wird in jeder Viertelperiode zwischen einem Extremum und dem nachfolgenden Nulldurchgang der Netzspannung eine Funktion abgetastet, und durch den Schnittpunkt beider Kurven der Zündwinkel für die gegenparallelen Thyristoren festgelegt. Diese recht einfach erscheinende Aufspaltung des gemessenen Ofenstromes in einen Wirk- und Blindanteil geht allerdings von der idealisierenden Annahme aus, daß der Ofenstrom zumindest abschnittweise zwischen seinen Nulldurchgängen als näherungsweise sinusförmig angenommen werden kann. In der Praxis ist der Ofenstrom mehr oder weniger stark mit Oberwellen verseucht, so daß dieser im günstigsten Fall abschnittweise "periodisch" ist. Eine Erfassung des Momentanwertes des Ofenstromes im Moment des Extremums der Phasenspannung und dem daraus folgenden Rückschluß auf die Amplituden von als sinusförmig angenommenen Wirk- und Blindanteilen ist somit mit einem großen Fehler behaftet. Zudem kann der Eindruck entstehen, daß plötzliche Änderungen des Ofenstromes sich unmittelbar auch in einer entsprechenden Änderung der dazugehörigen Blindleistungsamplitude auswirken. Allein aufgrund der notwendigen Filterung des Ofenstromes stehen in der Praxis extrapolierte Amplituden von Ofenstrom und dessen Blindanteil meistens erst in der auf die Erfassung der Amplituden folgenden Halbwelle des Ofenstromes zur Verfügung. Diese können erst im nächsten steuerbaren Winkelintervall zwischen dem nächsten Extremum und dem darauffolgenden Nulldurchgang der Netzspannung zur Bildung des Zündwinkels für die zuschaltbare Induktivität verwendet werden. So ist von diesem Verfahren nur eine durchschnittliche Genauigkeit und Schnelligkeit zu erwarten. In der Praxis sind zudem noch erhebliche zusätzliche Maßnahmen erforderlich, wie desweiteren gezeigt werden wird.

So sind viele bekannte Kompensationsverfahren mit dem Mangel einer schlechten Steuerbarkeit behaftet, da zur Erfassung der zu kompensierenden Blindleistung in der Praxis häufig über mindestens eine halbe Netzperiode integriert wird. So steht die zur Ansteuerung der zuschaltbaren Drosselspule eigentlich bereits innerhalb der zweiten Hälfte dieser ersten Netzhalbperiode benötigte Information erst an deren Ende zur Verfügung. Eine gesteuerte Zuschaltung kann somit erst in der zweiten Hälfte der folgenden Netzhalbperiode erfolgen. In der Zwischenzeit können sich aber die Lastverhältnisse bereits so geändert haben, daß mit dem "alten" Steuerwert nur mehr unvollständig kompensiert werden kann.

Ein weiteres Problem bisheriger Ausführungen ist es, daß ein gezündeter steuerbarer Reaktor nicht mehr abschaltbar ist. Erst im natürlichen Nulldurchgang des Spulenstromes sperrt der Thyristor wieder von selbst. Nach Einschalten des steuerbaren Reaktors können Änderungen im Ofenstromverlauf nicht mehr berücksichtigt werden. Dies erhöht den Kompensationsfehler und führt zu einer mittleren Stelltotzeit von mindestens einer Viertelnetzperiode.

Aus der US-Patentschrift mit der Nummer 4 555 659 ist es bereits bekannt, zur Verbesserung der Steuerbarkeit eines nach dem direkten Kompensationsverfahren arbeitenden Blindstromstellers mehrere getrennt zuschaltbare Induktivitäten parallel anzuordnen. Je nach dem aktuellen Bedarf an Kompensationsblindleistung können diese im steuerbaren Winkelintervall zwischen einem Extremum und dem nachfolgenden Nulldurchgang der dazugehörigen Netzspannung sukzessiv zugeschaltet werden. Der Zündwinkel für jeden dieser "parallelen Zweige", jeweils gerechnet vom Beginn des steuerbaren Winkelintervalles, besteht dabei allerdings aus zwei Anteilen. Der erste Anteil ist fest vorgegeben und bestimmt, wann der jeweilige Zweig frühestmöglich zugeschaltet werden kann. Für diese Zeitspanne ist der Zweig gesperrt und kann noch nicht an der Kompensation teilnehmen. Für jeden der parallelen Zweige hat dieser feste Zündwinkelanteil einen anderen Wert, welche untereinander entsprechend der vorgesehenen Zuschaltreihenfolge der Zweige so gestaffelt sind, daß dem zuerst zuschaltbaren Zweig der kleinste und dem zuletzt zuschaltbaren Zweig der größte Wert zugeordnet ist. Der zweite Zündwinkelteil stellt den eigentlichen variablen Anteil dar, der abhängig vom aktuellen Bedarf an Kompensationsblindleistung unterschiedlich groß gewählt wird. Er kann im Bereich zwischen dem konstanten Winkelanteil als untere Grenze und dem Nulldurchgang der zugeordneten Netzspannung als obere Grenze liegen.

Das zur Ansteuerung dieses Blindstromstellers dienende Verfahren nimmt direkt Bezug auf ein aus der US-Patentschrift mit der Nummer 4 068 159 bekanntes Verfahren zur Ermittlung der variablen Zündwinkelanteile. Dort wird unter der Voraussetzung sinusförmiger bzw. zumindest sinusähnlicher, periodischer Phasenströme ähnlich vorgegangen, wie es bereits zur zitierten "IEEE Transactions on Power Apparatus and Systems" beschrieben wurde. Dabei werden durch Integration der Ofenströme die Amplituden der Grundschwingungen von deren Wirk- bzw. Blindanteilen extrapoliert. Die Integrationsergebnisse dienen direkt zur Vorgabe der aktuellen variablen Zündwinkelanteile. Mit Hilfe dieser Integrationen können zwar mögliche Oberwellen in den Phasenströmen weggeglättet werden, doch erhöhen diese eine endliche Zeit beanspruchenden Rechenoperationen auch die Stelltotzeit. Auf der einen Seite sollten diese Integrationen erst knapp vor dem jeweiligen steuerbaren Winkelintervall begonnen und zudem gerade mit dessen Beginn bzw. dem Ende des sich anschließenden konstanten Winkelanteils abgeschlossen sein, damit die Totzeit zwischen der Auswertung der der Kompensation unterworfenen Phasenströme und der Umsetzung der Auswerteergebnisse in Stellbefehle möglichst gering ist. Auf der anderen Seite aber müssen diese Integrationen auf die dazugehörigen Phasenspannungen synchronisiert werden und zur Sicherstellung des Glättungseffektes eine endliche Zeitdauer haben, damit die Amplitude des Grundschwingungsanteiles des jeweiligen Blindstromes mit einer ausreichenden Genauigkeit gewonnen werden kann. So besteht bei dem aus der US 4 555 659 bekannten Blindstromsteller grundsätzlich nicht die Möglichkeit, bei sehr stark schwankendem Bedarf an Kompensationsblindleistung vor Ablauf der jeweiligen festen Zündwinkelanteile und damit vor Beendigung der bis dahin ablaufenden Phasenstromintegrationen vorzeitig die dazugehörigen Zweige zuzuschalten. Die Steuerbarkeit dieses Stellers ist somit beschränkt. Ferner unterliegt die Genauigkeit dieses Steuerverfahrens den gleichen Beschränkungen wie das bereits zitierte Verfahren aus den "IEEE Transactions on Power Apparatus and Systems". Je weiter der tatsächliche Verlauf der Phasenströme von der angenommenen idealen Sinusform abweicht, umso größer wird der Fehler in der extrapolierten Grundschwingungsamplitude des Blindstromanteils sein.

Insbesondere bei der mathematischen Behandlung dieser gewünschten "Harmonisierung" schnell veränderlicher Ströme, die während der Einschmelzphase in Drehstrom-Lichtbogenöfen auftreten und auf schnellen, nicht vorhersehbaren Änderungen der Einsatzwiderstände der drei Lichtbögen im Wertebereich zwischen Null und Unendlich beruhen, treten schnell Probleme mit den bekannten Definitionen von Wirk- und Blindleistung bzw. Wirk- und Blindstrom auf.

Bei diesen Definitionen, wie sie z.B. der DIN 40 110 zu entnehmen sind, wird häufig davon ausgegangen, daß ideale sinusförmige Spannungs- und Stromverläufe vorliegen. Ist dagegen der Strom zwar eine periodische, aber nicht sinusförmige Zeitfunktion, so gehen in die Blindleistung, im Gegensatz zur Wirkleistung zusätzlich die Effektivwerte aller Stromoberschwingungen mit ein.

Kompliziert werden die notwendigen Leistungsdefinitionen bereits dann, wenn davon ausgegangen werden muß, daß sowohl die Spannungs- als auch die Stromverläufe zwar periodische aber nicht sinusförmige Zeitfunktionen sind. Nur in den Anmerkungen zu DIN 40 110 wird unter Verweisung auf die Schrift von S. Fryze, ETZ 53 (1932), S. 596, 625 und 700 darauf hingewiesen, daß auch in einem solchen Fall aus den Augenblickswerten von Strom und Spannung eine Aufspaltung in Wirk- und Blindleistung möglich ist.

Doch auch die Annahme, daß die Spannungs- und Stromverläufe bei Lichtbogenöfen zumindest periodisch sind, läßt sich in vielen Fällen nicht aufrechterhalten.

Wie z.B. Depenbrock in ETZ-A, Bd. 98 (1977) H. 6, S. 408 zeigt, läßt sich mit Hilfe einer geeigneten Erweiterung der Wirkleistungsdefinition auch die Beschränkung überwinden, daß die Verbraucherströme zumindest als periodische Zeitfunktionen angesehen werden müßten. Zur Bildung der Sollverläufe der Anschlußströme eines Blindstromstellers wird dann der zu kompensierende Blindanteil durch Subtraktion des Wirkstromzeitverlaufes vom aktuellen Verbraucherstrom gebildet. Dieser wiederum wird mit Hilfe der erweiterten Wirkleistungsdefinition aus den Augenblickswerten der Verbraucherspannungen und Ströme hergeleitet wird. Die "Informationsverarbeitung" beruht dabei hauptsächlich auf meßbaren Augenblickswerten und kommt ohne extrapolierte "Amplitudengrößen" aus.

Ein solches schnelles Kompensationsverfahren setzt natürlich voraus, daß der Blindstromsteller selbst schnell genug gesteuert werden kann. Insbesondere sollen dessen Anschlußströme so schnell gesteuert werden können, daß sie dem Zeitverlauf eines stochastisch schwankenden Sollwertes mit ausreichend geringem Fehler folgen können. In der zitierten ETZ-A, Bd. 98 (1977) wird hierfür ein selbstgeführter Stromrichter in Form eines "Vierquadrantenstellers" benutzt. Stromrichter sind aber häufig aufgrund von deren internen Stromkommutierungen selbst Verursacher von Netzstörungen.

So liegt der vorliegenden Erfindung die Aufgabe zugrunde, die Ansteuerung eines bekannten Blindstromstellers, der zur Verbesserung der Stellgeschwindigkeit mit mehreren parallel angeordneten und getrennt zuschaltbaren Induktivitäten ausgerüstet ist, weiter zu verbessern. Er soll als Stellglied nun insbesondere auch für solche Kompensationsverfahren geeignet sein, die unter Zugrundelegung z.B. der von Fryze vorgeschlagenen Bildung der Blindstromanteile in Form von Augenblickswerten, eine sehr schnelle Reaktion des Stellers auf einen im Prinzip stochastisch schwankenden Sollwert an seinem Eingang erwarten.

Neben der von Depenbrock in der zitierten ETZ-A, Bd. 98 (1977) vorgeschlagenen erweiterten Wirkleistungsdefinition sind noch andere Verfahren denkbar, die mehr an den natürlichen Eigenschaften von Drehstromsystemen orientiert sind, und sich deren vorteilhafte mathematische Darstellung und Verarbeitung in den bekannten Komponentensystemen nach DIN 13 321 zunutze machen.

Die Aufgabe wird gelöst durch das Kennzeichen des Anspruchs 1. In den Unteransprüchen sind weitere vorteilhafte Ausführungen des erfindungsgemäßen Verfahrens angegeben.

Zur Darstellung eines Standes der Technik und zur näheren Erläuterung der Erfindung dienen die nachfolgend kurz angeführten Figuren. Dabei zeigt

FIG 1 den bereits erläuterten, bekannten "Reaktortransformator",
FIG 2 einen bekannten einphasigen Blindstromsteller mit vier parallelen Zweigen,
FIG 3 einen bekannten dreiphasigen Blindstromsteller mit je vier parallelen Zweigen für jede verkettete Spannung,
FIG 4 die Bildung eines Iststromes für eine Phase des Blindstromstellers der FIG 3 mit einem sinusförmigen Stellersollstrom als Steuersignalverlauf nach dem erfindungsgemäßen Verfahren,
FIG 5 das Schaltspiel für eine Phase des Blindstromstellers der FIG 3 mit einem nicht sinusförmigen Stellersollstrom als Steuersignalverlauf nach dem erfindungsgemäßen Verfahren,
FIG 6 die Bildung des Istromes für eine Phase des Blindstromstellers der FIG 3 mit der Amplitude eines sinusförmigen Stellersollstromes als Steuersignalverlauf nach dem erfindungsgemäßen Verfahren, und
FIG 7 die Bildung des Iststromes für eine Phase des Blindstromstellers der FIG 3 mit gegenüber dem Ausführungsbeispiel der FIG 6 voll ausgenutzten steuerbaren Winkelbereich nach dem erfindungsgemäßen Verfahren.

Das erfindungsgemäße Verfahren dient zur schnellen Ansteuerung von bekannten Blindstromstellern, wie sie beispielhaft in FIG 2 in einphasiger bzw. in FIG 3 in dreiphasiger Ausführung dargestellt sind. Diese bestehen bei einphasiger Ausführung bzw. bei dreiphasiger Ausführung getrennt für jede verkettete Spannung aus parallelen Zweigen mit je einer in Reihe zu einem elektronischen Schalter angeordneten Spule. Die Anzahl der Zweige und der Betrag der einzelnen Induktivitäten werden unter Berücksichtigung aller Randbedingungen anwendungsspezifisch festgelegt. Die Erfindung wird im folgenden am Beispiel des an der Phasenspannung $u_{RS}$ liegenden Teiles des dreiphasigen Blindstromstellers gemäß der FIG 3 erläutert. Dieser besteht aus den vier parallelen Zweigen $Z_1$ bis $Z_4$ mit den elektronischen Schaltern $T_{12}$, $T_{34}$, $T_{56}$ und $T_{78}$ und den Spulen $L_1$ bis $L_4$. Für die übrigen Teile ist das Verfahren entsprechend anwendbar.

Es ist das Ziel der Kompensation, den Eingangsstrom des jeweiligen Stellerteiles, in FIG 3 z.B. den Strom $i_{RS}$, möglichst schnell und genau einem Sollwertverlauf $i_{RS}^*$ nachzuführen. Dieser wird insbesondere unter Berücksichtigung des aktuellen Verbraucherstromes und der insgesamt angestrebten Güte der Kompensation in geeigneter Weise vorgegeben. Im oberen Teil der FIG 5 ist über drei Halbperioden der Netzspannung $u_{RS}$ ein solcher möglicher Sollwertverlauf $i_{RS}^*(t)$ dargestellt. Dessen Verlauf ist nur näherungsweise sinusförmig mit einer Grundschwingungsamplitude, die sich mit jeder Halbperiode von $u_{RS}$ verändern kann. Im Prinzip kann sich der Sollwertverlauf zwischen seinen Nulldurchgängen, deren Phasenwinkel mit den Phasenwinkeln der Extrema der entsprechenden Netzspannung übereinstimmen, stochastisch verändern.

Die Induktivitäten der vier Zweige $Z_1$ bis $Z_4$ können nur innerhalb einer jeden Viertelperiode $\omega T_S$ zugeschaltet werden, die zwischen einem Extremum und dem nachfolgenden Nulldurchgang der Netzspannung $u_{RS}$ liegt und "steuerbares Winkelintervall" genannt wird. Zudem ist es vorteilhaft einen zusätzlichen Anfangsphasenwinkel $\omega t_0$ einzuhalten, der sich an den Beginn des steuerbaren Winkelintervalles anschließt und nach dessen Ablauf eine mögliche Zündung der einzelnen Zweige freigegeben wird.

Erfindungsgemäß werden die Induktivitäten dann zugeschaltet, wenn ein vorgegebener Steuersignalverlauf nach Ablaufen eines Anfangsphasenwinkels, soweit vorhanden, den Zweigen zugeordnete phasenabhängige Schwellenwertverläufe überschreitet. Der sich so ergebende Stellerstrom klingt in der auf das steuerbare Winkelintervall folgenden Viertelperiode bis zum nächsten Extremum der Netzspannung von selbst wieder ab, indem die gezündeten Thyristoren der einzelnen Zweige wegen des Verlöschens der jeweiligen Zweigströme sperren.

Gemäß FIG 4 wird zur Erläuterung einer ersten Ausführung des erfindungsgemäßen Verfahrens, bei dem der Steuersignalverlauf direkt dem Verlauf des gewünschten Sollstromes $i^*_{RS}(t)$ am Eingang der parallelen Zweige selbst entspricht, zunächst angenommen, daß der Sollstrom sinusförmig und rein induktiv sei. Da dort beim Anfangsphasenwinkel $\omega t_0$ der Steuersignalverlauf $i^*_{RS}$ bereits oberhalb des Schwellenwertverlaufes $S_1$ liegt, wird unmittelbar zu Beginn des Kompensationsvorganges der Zweig $Z_1$ eingeschaltet. Im zweiten Schnittpunkt bei dem Phasenwinkel $\omega t_1$ mit dem Schwellenwert $S_2$ wird der Zweig $Z_2$ zugeschaltet, während sich sonst aufgrund der Amplitude des Sollwertes bis zum Ende des steuerbaren Winkelintervalls keine weiteren Schnittpunkte ergeben. Um den Kompensationsfehler aufgrund der Abweichung des tatsächlichen Stellerstromes $i_{RS}$ vom Sollverlauf $i_{RS}^*$ so gering als möglich zu halten, werden die Schwellenwertverläufe erfindungsgemäß so vorgegeben, daß die Integrale über den Ist- und Sollwertverlauf des Stromes gleich sind. Dementsprechend ist die Summe der Differenzflächen 1 und 2 in der FIG 4 gleich der Differenzfläche 3.

In FIG 5 ist beispielhaft das sich ergebende Schaltbeispiel bei einem nicht sinusförmigen Steuersignalverlauf $i^*_{RS}(t)$ anhand der unterschiedlichen Stromführungsdauern der elektronischen Schalter $T_{12}$ bis $T_{78}$ der einzelnen Stellerzweige $Z_1$ bis $Z_4$ dargestellt. Man erkennt, daß zwischen Anfangsphasenwinkel und dem Ende eines jeden steuerbaren Winkelintervalls abhängig vom aktuellen Verlauf des Sollstromes nur eine bestimmte Anzahl an Ventilen gezündet wird, und deren Stromführungsdauern stark unterschiedlich sind. Dieses gestaffelte Zuschalten von Induktivität entsprechend dem unvorhersehbaren Verlauf des Sollstromes erhöht die Steuerbarkeit des erfindungsgemäßen Verfahrens wesentlich. Ferner nimmt der Kompensationsfehler umso mehr ab, je feinstufiger mit entsprechend vielen parallelen Zweigen im Blindstromsteller Induktivität bei Bedarf zugeschaltet werden kann. Zur gleichmäßigeren Verteilung der in den einzelnen Spulen hervorgerufenen Stromwärmeverluste ist es besonders vorteilhaft, wenn bei einer positiven Netzspannung die Zweige des Blindstromstellers mit $Z_1$ beginnend zugeschaltet werden, während bei einem steuerbaren Winkelintervall mit negativer Netzspannung die Zweige in abnehmender Zählrichtung zugeschaltet werden. In FIG 5 beginnt dementsprechend die Zuschaltung in der mittleren Netzhalbperiode mit $Z_4$.

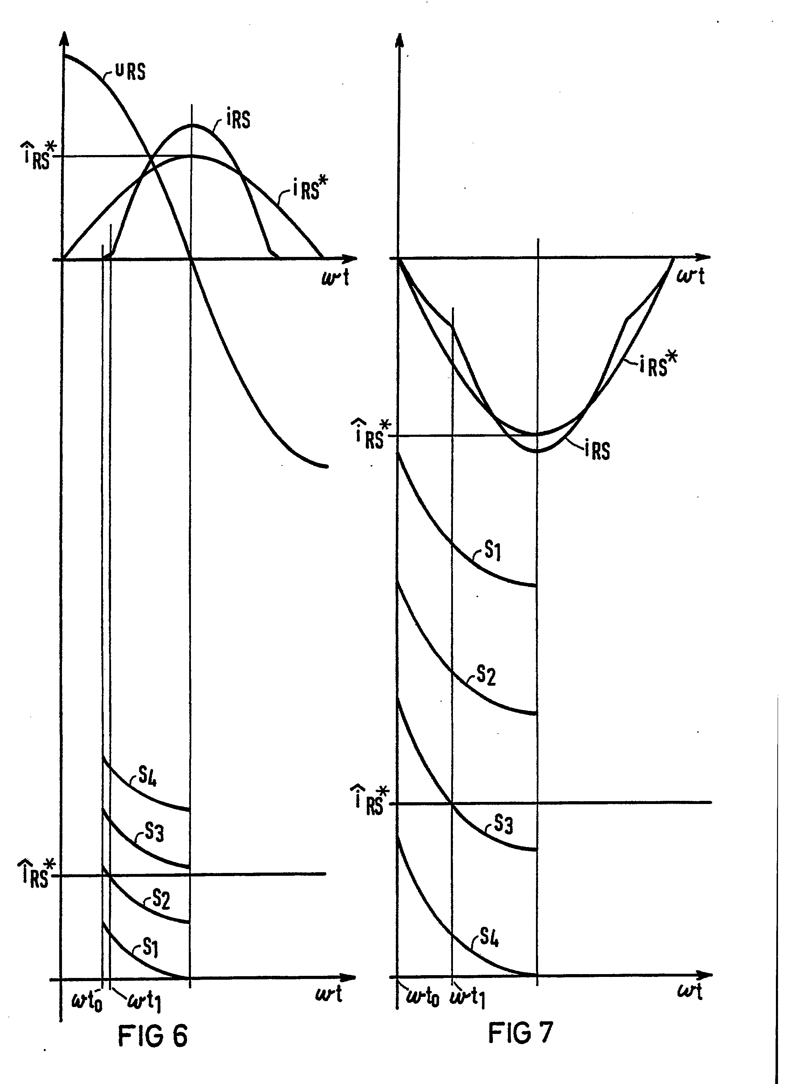

In einer zweiten Ausführung des erfindungsgemäßen Verfahrens dient als Steuersignalverlauf der Quotient aus dem Sollstrom $i_{RS}^*(t)$ und der Sinusfunktion des Phasenverschiebungswinkels der Netzspannung sin $\omega t$. Auch hier wird zunächst angenommen, daß der Sollstromverlauf $i^*_{RS}$ gemäß dem in FIG 6 dargestellten Fall sinusförmig ist. Der Steuersignalverlauf entspricht dann gerade dessen Amplitude $\hat{i}_{RS}^*$ und ist über eine Halbperiode zwischen zwei Extrema der Netzspannung konstant. So wird im Anfangsphasenwinkel $\omega t_0$ der Zweig $Z_1$ sofort, und unmittelbar darauf der Zweig $Z_2$ zugeschaltet. Zur Erzielung eines möglichst geringen Kompensationsfehlers werden die phasenabhängigen Schwellenwerte so vorgegeben, daß die Amplitude der Grundschwingung des Iststromes $i_{RS}$ des Blindstromstellers gleich dem Mittelwert des Steuersignalverlaufes ist. Ist dagegen der Sollstromverlauf nicht sinusförmig, so ist in diesem Fall auch der Steuersignalverlauf $i^*_{RS}(t)$ eine Funktion der Zeit.

Grundsätzlich sollte der Anfangsphasenwinkel $\omega t_0$ unter Berücksichtigung der jeweils vorliegenden Kompensationsaufgabe besonders sorgfältig ausgewählt werden. Er sollte so klein als möglich sein und kann prinzipiell auch Null sein, also dem Beginn des steuerbaren Winkelintervalls in einem Extremum der Netzspannung entsprechen. In der Ausführung der Erfindung mit dem Sollstrom $i_{RS}^*$ als Steuersignalverlauf z.B. gemäß der FIG 4, würden bei verschwindendem Anfangsphasenwinkel alle Schwellenwertverläufe $S_1$ bis $S_4$ gemeinsam vom Ursprung des dortigen Koordinatensystems ausgehen. So hat ein Anfangsphasenwinkel lediglich die Aufgabe, möglicherweise in diesem Bereich auftretende unausgeprägte Schnittpunkte zwischen Steuersignalverlauf und Schwellenwertverläufen, und somit mögliche Fehleinschaltungen paralleler Zweige zu vermeiden. Bei der Ausführung der Erfindung mit dem Quotienten aus Sollstrom und sin $\omega t$ als Steuersignalverlauf kann dagegen uneingeschränkt der Anfangsphasenwinkel mit dem Extremum der Netzspannung zusammenfallen, wie dies in der FIG 7 dargestellt ist. Es wird somit der gesamte steuerbare Winkelbereich zur gestaffelten Induktivitätszuschaltung ausgenützt, was besonders vorteilhaft zu einer günstigen Amplitudenverteilung des durch die Kompensation im Netzstrom hervorgerufenen, unerwünschten Oberschwingungsspektrums führt.

**Patentansprüche**

1. Verfahren zum Ansteuern eines Blindstromstellers, der pro Netzspannungsphase jeweils aus mindestens zwei parallelen Zweigen ($Z_1$, $Z_2$, ...) mit je einer in Reihe zu einem elektronischen Schalter ($T_{12}$, $T_{34}$, ...) angeordneten Induktivität ($L_1$, $L_2$, ...) besteht, wobei
    a) die Zweige im steuerbaren Winkelintervall ($\omega T_S$) zwischen einem Extremum und dem darauf folgenden Nulldurchgang der dazugehörigen Netzspannung bei Phasenwinkeln zugeschaltet werden, die vom aktuellen Bedarf an Kompensationsblindleistung abhängig sind ,
dadurch gekennzeichnet, daß
b) im Winkelintervall eine Schar phasenabhängiger Schwellenwertverläufe ($S_1$, $S_2$, ...) fest vorgegeben und jedem der parallelen Zweige ($Z_1$, $Z_2$, ...) einer der Schwellenwertverläufe zugeordnet ist, und
c) ein jeder der Zweige dann zugeschaltet wird, wenn ein Steuersignalverlauf den dazugehörigen Schwellenwertverlauf überschreitet.

2. Verfahren nach Anspruch 1, dadurch gekennzeichnet, daß ein Winkelbereich im steuerbaren Winkelintervall ($\omega T_S$) gegeben ist durch das Überschreiten eines Anfangsphasenwinkels ($\omega t_O$) nach einem Extremum einer der Netzspannungen bis zum Erreichen des darauf folgenden Nulldurchganges dieser Netzspannung, innerhalb dem die parallelen Zweige zugeschaltet werden können.

3. Verfahren nach Anspruch 1 oder 2, dadurch gekennzeichnet, daß der Steuersignalverlauf einem Sollstrom ($i_{RS}*$(t) am Eingang der parallelen Zweige entspricht.

4. Verfahren nach Anspruch 3, dadurch gekennzeichnet, daß der Steuersignalverlauf einem am Eingang der parallelen Zweige entsprechend dem aktuellen Bedarf an Kompensationsblindleistung beliebig vorgebbaren, insbesondere nicht sinusförmigen, Sollstromverlauf ($i_{RS}*$(t)) entspricht, dessen Nulldurchgänge mit den Extrema der entsprechenden Netzspannung zeitlich zusammenfallen.

5. Verfahren nach Anspruch 3 oder 4, dadurch gekennzeichnet, daß die phasenabhängigen Schwellenwerte ($S_1$, $S_2$, ...) so vorgegeben werden, daß in jeder Halbperiode zwischen zwei Extrema der Netzspannung ($u_{RS}$) bei sinusförmigem Sollstromverlauf ($i_{RS}*$) die Integrale über den Soll- und Istverlauf des Stromes am Eingang der parallelen Zweige gleich sind.

6. Verfahren nach Anspruch 1 oder 2, dadurch gekennzeichnet, daß der Steuersignalverlauf dem Quotienten aus Sollstrom ($i_{RS}*$ (t)) am Eingang der parallelen Zweige und der Sinusfunktion des Phasenwinkels der Netzspannung (sin $\omega t$) entspricht.

7. Verfahren nach Anspruch 6, dadurch gekennzeichnet, daß bei einem sinusförmigen Verlauf des Sollstromes ($\hat{i}_{RS}*$) am Eingang der parallelen Zweige der Steuersignalverlauf dessen Amplitude ($\hat{i}_{RS}*$) entspricht.

8. Verfahren nach Anspruch 6 oder 7, dadurch gekennzeichnet, daß die phasenabhängigen Schwellenwerte ($S_1$, $S_2$, ...) so vorgegeben werden, daß in jeder Halbperiode ($2\omega T_S$) zwischen zwei Extrema der Netzspannung ($u_{RS}$) die Amplitude der Grundschwingung des Iststromes am Eingang der parallelen Zweige gleich dem Mittelwert des Steuersignalverlaufes entspricht.

9. Verfahren nach einem der vorangegangenen Ansprüche, dadurch gekennzeichnet, daß der elektronische Schalter ($T_{12}$, $T_{34}$, ...) eines jeden Zweiges ($Z_1$, $Z_2$, ...) aus zwei antiparallelen Thyristoren besteht.

**Claims**

1. Method for controlling a reactive current regulator which consists, per phase of supply voltage, of at least two parallel branches ($Z_1$, $Z_2$, ...), each with an inductor ($L_1$, $L_2$, ...) connected in series to an electronic switch ($T_{12}$, $T_{34}$, ...), wherein
a) the branches are switched in the controllable angular interval ($\omega T_S$) between one extreme and the subsequent zero-crossing of the associated supply voltages at phase angles which are determined by the given compensation reactive power requirement, characterised in that
b) a system of phase-dependent threshold value progressions ($S_1$, $S_2$, ...) is set in the angular interval and one of the threshold value progressions is assigned to each of the parallel branches ($Z_1$, $Z_2$, ...), and
c) each of the branches is then switched when a control signal progression exceeds the associated threshold value progression.

2. Method as in claim 1, characterised in that an angular range is defined in the controllable angular interval ($\omega T_S$) by the exceeding of an initial phase angle ($\omega t_o$) after one extreme of one of the supply voltages until reaching the subsequent zero-crossing of this supply voltage, within which the parallel branches can be switched.

3. Method as in either of claims 1 or 2, characterised in that the control signal progression corresponds to a reference current ($i_{RS}*$(t)) at the input of the parallel branches.

4. Method as in claim 3, characterised in that the control signal progression corresponds to a reference current progression ($i_{RS}*$(t)), particularly a nonsinusoidal progression, which can be preset at the input of the parallel branches according to the given compensation reactive power requirement, and the crossovers of which coincide with the extremes of the corresponding supply voltage.

5. Method as in either of claims 3 or 4, characterised in that the phase-dependent threshold values ($S_1$, $S_2$, ...) are preset so that, in each half-cycle between two extremes of the supply voltage ($u_{RS}$) with a sinusoidal reference current progression ($i_{RS}*$), the integrals over the reference and actual progressions of the current at the input of the parallel branches are equal.

6. Method as in either of claims 1 or 2, characterised in that the control signal progression corresponds to the quotient from the reference current ($i_{RS}*$(t) ) at the input of the parallel branches and the sine function of the phase angle of the supply voltage (sin$\omega t$).

7. Method as in claim 6, characterised in that, for a sinusoidal progression of the reference current ($i_{RS}*$) at the input of the parallel branches, the control signal progression corresponds to its amplitude ($\hat{i}_{RS}*$).

8. Method as in either of claims 6 or 7, characterised in that the phase-dependant threshold values ($S_1$, $S_2$, ...) are preset so that in each half-cycle ($2\omega T_S$) between two extremes of the supply voltage

(u$_{RS}$) the amplitude of the fundamental oscillation of the actual current at the input of the parallel branches is equal to the mean value of the control signal progression.

9. Method as in any one of the preceding claims, characterised in that the electronic switch (T$_{12}$, T$_{34}$, ...) of each branch (Z$_1$, Z$_2$, ...) consists of two antiparallel thyristors.

**Revendications**

1. Procédé pour commander un régulateur de courant réactif, qui est constitué, pour chaque phase de la tension du réseau, respectivement par au moins deux branches parallèles (Z$_1$, Z$_2$, .. .) comportant chacune une inductance (L$_1$, L$_2$, ...) branchée en série avec un interrupteur électronique (T$_{12}$, T$_{34}$,...), et selon lequel

a) on raccorde de façon additionnelle les branches pendant l'intervalle angulaire commandable (ωT$_S$) entre un extremum et l'annulation suivante de la tension associée du réseau, pour des angles de phase, qui dépendent du besoin réel en puissance réactive de compensation, caractérisé par le fait que

b) pendant l'intervalle angulaire, un ensemble de variations (S$_1$, S$_2$, ...) de valeurs de seuil, qui dépendent de la phase, est prédéterminé de façon fixe et l'une des variations des valeurs de seuil est associée à chacune des branches parallèles (Z$_1$, Z$_2$, ...), et

c) chacune des branches est raccordée de façon additionnelle lorsqu'une variation du signal de commande dépasse la variation de la valeur de seuil, qui lui est associée.

2. Procédé suivant la revendication 1, caractérisé par le fait qu'une plage angulaire, dans laquelle les branches parallèles peuvent être raccordées de façon additionnelle, dans l'intervalle angulaire commandable (.T$_S$) est déterminée par le dépassement d'un angle de phase initial (ωt$_0$) après un extremum de l'une des tensions du réseau et ce jusqu'à l'apparition de l'annulation suivante de cette tension du réseau.

3. Procédé suivant la revendication 1 ou 2, caractérisé par le fait que la variation du signal de commande correspond à un courant de consigne (i$_{RS}$*(t)) présent à l'entrée des branches parallèles.

4. Procédé suivant la revendication 3, caractérisé par le fait que la variation du signal de commande correspond à une variation du courant de consigne (i$_{RS}$*(t)), qui peut être prédéterminée de façon quelconque en fonction du besoin réel en puissance réactive de compensation et notamment n'est pas sinusoïdale et dont les annulations coïncident dans le temps avec les extrema de la tension correspondante du réseau.

5. Procédé suivant la revendication 3 ou 4, caractérisé par le fait que les valeurs de seuil (S$_1$, S$_2$, ...), qui dépendent de la phase, sont prédéterminées de telle sorte que pendant chaque alternance entre deux extrema de la tension du réseau (u$_{RS}$), dans le cas d'une variation sinusoïdale du courant de consigne (i$_{RS}$*), les intégrales de la variation de consigne et de la variation réelle du courant à l'entrée des branches parallèles sont identiques.

6. Procédé suivant la revendication 1 ou 2, caractérisé par le fait que la variation du signal de commande correspond au quotient du courant de consigne (i$_{RS}$*(t)) présent à l'entrée des branches parallèles par la fonction sinusoïdale de l'angle de phase de la tension du réseau (sin .t).

7. Procédé suivant la revendication 6, caractérisé par le fait que, dans le cas d'une variation sinusoïdale du courant de consigne (i$_{RS}$*) à l'entrée des branches parallèles, la variation du signal de commande correspond à l'amplitude ( î$_{RS}$*) de ce courant.

8. Procédé suivant la revendication 6 ou 7, caractérisé par le fait que les valeurs de seuil (S$_1$, S$_2$, ...), qui dépendent de la phase, sont prédéterminées de telle sorte que pendant chaque alternance (2 ωT$_S$) entre deux extremes de la tension du réseau (u$_{RS}$), l'amplitude de l'oscillation fondamentale du courant réel à l'entrée des branches parallèles est égale à la valeur moyenne de la variation du signal de commande.

9. Procédé suivant l'une des revendications précédentes, caractérisé par le fait que l'interrupteur électronique (T$_{12}$, T$_{34}$, ...) de chaque branche (Z$_1$, Z$_2$, ...) est constitué par deux thyristors antiparallèles.

FIG 1

FIG 2

FIG 3

FIG 4

FIG 5

EP 0 234 040 B1

FIG 6

FIG 7